# EUROPÄISCHE PATENTANMELDUNG

(11) **EP 2 025 990 A1**
(43) Veröffentlichungstag der Anmeldung: **18.02.2009**
(21) Anmeldenummer: 08012375.5
(22) Anmeldetag: 09.07.2008
(51) Int. Cl.: F16N 11/10, B65D 83/14, F16N 11/00, H01M 6/36

(54) **Schmierstoffspender**

(30) Priorität: 08.08.2007 DE 102007037422
(71) Anmelder: Perma-Tec GmbH & Co. KG, 97717 Euerdorf (DE)
(72) Erfinder: Eisenbacher, Egon, 97753 Karlstadt (DE)
(74) Vertreter: Albrecht, Rainer Harald

(57) **Zusammenfassung**

Die Erfindung betrifft ein Schmierstoffspender mit einem Gehäuse (1), welches einen Boden (2) mit einer Gehäuseöffnung (3), einen Deckel (4) und dazwischen einen Gehäusemantel (5) aufweist, einem Schmierstoffreservoir (6) und einem in dem Gehäuse (1) angeordneten Gaserzeuger (7) zum Auspressen des Schmierstoffs, wobei der Gehäusemantel (5) zumindest abschnittsweise transparent oder durchscheinend ist und zumindest eine Barriereschicht (8) aufweist. Erfindungsgemäß weist die Barriereschicht (8) eine polymere Grundsubstanz (9) und zur Verbesserung der Barriereeigenschaften eine Beimischung von typischerweise anorganischen Schichtstoffen (10) auf.

## Beschreibung

Die Erfindung betrifft einen Schmierstoffspender mit einem Gehäuse, welches einen Boden mit einer Gehäuseöffnung, einen Deckel und einen Gehäusemantel aufweist, einem Schmierstoffreservoir und einem in dem Gehäuse angeordneten Gaserzeuger zum Auspressen des Schmierstoffs, wobei der Gehäusemantel zumindest abschnittsweise transparent oder durchscheinend ist und zumindest eine Barriereschicht aufweist. Der Gehäusemantel erstreckt sich zwischen dem Boden und dem Deckel des Gehäuses und weist üblicherweise eine zylindrische Form auf. Die Form des Gehäusemantels ist im Rahmen der Erfindung allerdings nicht auf eine kreiszylindrische Ausgestaltung beschränkt sondern kann auch eine beliebige, beispielsweise ovale oder eckige Grundfläche aufweisen. Der Boden und/oder der Deckel können einstückig mit dem Gehäusemantel in einem Fertigungsschritt gebildet oder stoffschlüssig mit diesem verbunden sein. Im Rahmen der Erfindung liegt es auch, den Boden und/oder den Deckel durch einen Presssitz, eine Schraub- oder Bajonettverbindung an dem Gehäusemantel anzuordnen.

Die vorliegende Erfindung ist auf einen gasgetriebenen Schmierstoffspender gerichtet, bei dem in dem Gehäuse ein Gaserzeuger angeordnet ist. Durch das erzeugte Gas wird in einem Druckraum innerhalb des Gehäuses ein Druck aufgebaut, der typischerweise über einen Kolben auf das Schmierstoffreservoir wirkt und den Schmierstoff aus der Gehäuseöffnung auspresst. Die weitere Ausgestaltung des Gaserzeugers ist im Rahmen der vorliegenden Erfindung nicht eingeschränkt, wobei vorzugsweise durch eine elektrochemische Zersetzung in einem galvanischen Prozess Gas erzeugt wird.

Aus der Druckschrift DE 38 11 469 C2 ist ein Schmierstoffspender mit einem Gaserzeuger bekannt, der einen Behälter mit einer Elektrolytflüssigkeit und ein aus zwei Metallen gebildetes galvanisches Element aufweist. Durch das Einbringen des galvanischen Elementes wird eine elektrochemische Gaserzeugung ausgelöst, wobei die Gaserzeugungsrate durch die Wahl der Elektrolytflüssigkeit einerseits und die Materialzusammensetzung und Beschaffenheit des galvanischen Elementes anderseits beeinflusst werden kann.

Aus der Druckschrift DE 35 32 335 C2 ist eine galvanische Zelle zur Entwicklung von Wasserstoff bzw. Sauerstoff bekannt. Die galvanische Zelle weist die Form einer Knopfbatterie auf, wobei die Gaserzeugungsrate durch eine Änderung des Stromflusses über das Gaserzeugungselement variierbar ist. Darüber hinaus sind Gaserzeuger bekannt, die einen Behälter mit Elektrolytflüssigkeit und darin zwei voneinander getrennte Elektroden aufweisen. Durch die Änderung des Stromflusses über die Elektroden und die Elektrolytflüssigkeit kann die Gaserzeugungsrate variiert werden. Ein solcher Gaserzeuger zur elektrochemischen Erzeugung eines Stickstoff enthaltenden Gases ist aus der Druckschrift DE 10 2004 032 260 B4 bekannt.

Besonders vorteilhaft ist eine Ausgestaltung des Gaserzeugers, bei der die Gaserzeugungsrate beispielsweise durch einen Microcontroller entsprechend der jeweiligen Erfordernisse variabel steuerbar ist.

Bei den bekannten Schmierstoffspendern besteht das Problem, dass das im Schmierstoffspender erzeugte Gas zu einem gewissen Anteil aus dem Gehäuse heraus diffundiert und daher nur teilweise für den Druckaufbau in dem Druckraum und für die Schmierstoffausbringung genutzt werden kann. Besonders gravierend sind die Verluste aufgrund von Diffusionen durch die Gehäusewände bei einer langen Gesamtschmierdauer des Schmierstoffgebers, die typischerweise bis zu einem Jahr und mehr betragen kann. Bei der Diffusion, die bei Wasserstoff als Treibgas besonders ausgeprägt ist, ist auch zu berücksichtigen, dass während des Betriebs des Schmierstoffspenders und der Entleerung des Schmierstoffreservoirs das Volumen des Druckraums und damit die für die Diffusion relevante Fläche des Gehäusemantels stetig zunimmt. Entsprechend steigen auch die Diffusionsverluste bei fortschreitender Entleerung.

Ein Schmierstoffspender mit den eingangs beschriebenen Merkmalen ist aus der Druckschrift EP 0 362 328 B1 bekannt. Bei der beschriebenen Ausgestaltung weist der Schmierstoffspender einen Behälter aus einem transparenten Kunststoffmaterial auf. Um insbesondere bei einer langen Betriebszeit von bis zu einem Jahr Diffusionsverluste zu verringern ist vorgesehen, zumindest in dem von einem Kolben überstrichenen Bereich des Behälters an der Außen- oder Innenseite eine gasdichte Metallschicht aufzubringen, wobei zur Füllstandskontrolle ein schmaler Längsbereich der Behälterwand unbedeckt bleiben soll. Das Aufbringen der Metallschicht ist aufwändig, wobei eine Überprüfung des Füllstandes durch einen Benutzer nur möglich ist, wenn im montierten Zustand des Schmierstoffspenders der schmale, unbedeckte Längsbereich sichtbar bleibt. Auch in funktionsmäßiger Hinsicht ist die Anordnung verbesserungsbedürftig. Wenn die Metallschicht an der Innenseite des Behältermantels angeordnet wird, ist die umfangsseitige Abdichtung des Kolbens im unebenen Übergangsbereich zwischen der Metallschicht und dem Sichtfenster schwierig. Bei einer Anordnung der Metallschicht an der Behälteraußenseite ist die Barrierewirkung unbefriedigend, da die Diffusion des Gases durch den Kunststoffmantel nicht wirksam unterbunden werden kann.

Ein Schmierstoffspender mit den eingangs beschriebenem Merkmal ist auch aus der Druckschrift WO 2005/061947 A1 bekannt, wobei der Schmierstoffspender einen Behälter mit einer transparenten Wandung aufweist, die dreischichtig aus transparentem Kunststoff gebildet sein kann. Zwischen einer inneren Schicht und einer äußeren Schicht aus transparentem Polyethylenterephthalat (PET) ist eine Barriereschicht aus Polyamid (PA) oder EthylenVinylalkohol-Copolymer (EVOH) vorgesehen. Die zumindest dreischichtige Fertigung ist aufwändig. Die verschiedenen Schichten müssen so gewählt werden, dass der Schmierstoffspender einerseits eine ausreichende Festigkeit und andererseits eine hohe Diffusionsbeständigkeit aufweist, wobei die verschiedenen Polymermaterialien auch miteinander verarbeitbar sein müssen. Schließlich ist auch die Barrierewirkung noch verbesserungsbedürftig.

Vor diesem Hintergrund liegt der Erfindung die Aufgabe zugrunde ein Schmierstoffspender anzugeben, dessen Gehäuse gute Barriereeigenschaften aufweist und leicht zu fertigen ist.

Ausgehend von einem Schmierstoffspender mit den eingangs beschriebenen Merkmalen wird die Aufgabe erfindungsgemäß dadurch gelöst, dass die Barriereschicht eine polymere Grundsubstanz und zur Verbesserung der Barriereeigenschaften eine Beimischung von Schichtstoffen aufweist. Die vorzugsweise anorganischen Schichtstoffe stellen dabei eine gute Barriere gegen das in dem Schmierstoffspender erzeugte Gas dar. Durch die Einbettung der Schichtstoffe wird bei einer vorgegebenen Dicke des Gehäusemantels in dem Bereich der Barriereschicht der Diffusionsweg verlängert, da die Moleküle oder Atome des Treibgases nicht oder nur zu einem geringen Anteil durch die Schichtstoffe hindurch diffundieren können. Als Schichtstoffe eignen sich Schichtsilikate, die vorzugsweise für die Einmischung in ein Polymer vorbehandelt sind.

Die Schichtstoffe werden bei der Bildung der Barriereschicht in eine polymere, vorzugsweise thermoplastische Grundsubstanz eingebracht, wobei die Schichtstoffe vorzugsweise zumindest weitgehend vollständig exfoliert, d. h. von einander abgeblättert sind und in dem thermoplastischen Polymer oder thermoplastischen Polymergemisch der Barriereschicht als fein dispergierte Plättchen vorliegen. Die einzelnen Plättchen haben zweckmäßigerweise eine sehr geringe Dicke in einem Bereich von typischerweise 0,5 bis 1,5 Nanometer (nm), besonders bevorzugt zwischen 0,8 bis 1,2 nm. Die Plättchen weisen dabei im Vergleich zu ihrer Dicke eine große flächige Ausdehnung auf. Das Verhältnis des senkrecht zur Dicke gemessenen mittleren Durchmessers zu der Dicke liegt dabei vorzugsweise zwischen 300 und 1100, besonders bevorzugt zwischen 200 und 500. Im Rahmen der Erfindung sind als Schichtstoffe beispielsweise Montmorillonite-Teilchen geeignet, die die gewünschten Eigenschaften und vorzugsweise durch eine entsprechende Vorbehandlung eine organophile Oberfläche aufweisen.

Im Rahmen einer vorteilhaften Ausgestaltung der Erfindung sind die einzelnen Plättchen entsprechend der Ausdehnung des Gehäusemantels im Wesentlichen flach ausgerichtet. So weisen beispielsweise bei einer kreiszylindrischen Ausgestaltung des Gehäusemantels die Flächennormalen der einzelnen Plättchen in Richtung der Längsachse des Gehäusemantels. Die Ausrichtung der Plättchen kann insbesondere durch den Fertigungsprozess der Barriereschicht erreicht werden, wobei sich die Ausrichtung aus der Fließrichtung der polymeren Grundsubstanz der Barriereschicht ergibt.

Die Barriereschicht erstreckt sich zweckmäßigerweise zumindest in dem Bereich des Gehäusemantels, in dem während des Betriebs des Schmierstoffspenders im Innern des Gehäuses der Druckraum für das entstehende Gas gebildet ist.

Im Rahmen der vorliegenden Erfindung beträgt der Anteil der Schichtstoffe in der Barriereschicht zwischen 1 Gew.-% und 10 Gew.-%, vorzugsweise zwischen 3 Gew.-% und 7 Gew.-%. Bei einem solchen Anteil an Schichtstoffen kann bei den üblichen Schichtdicken des Gehäusemantels eine sehr gute Barrierewirkung erreicht werden, ohne dass der Gehäusemantel seine transparenten oder zumindest durchscheinenden Eigenschaften verliert. Bei einem sehr großen Schichtstoffanteil ist auch zu berücksichtigen, dass einerseits die Herstellungskosten erhöht und andererseits die mechanischen Eigenschaften der Barriereschicht deutlich verschlechtert werden.

Im Rahmen der Erfindung kann vorgesehen sein, dass der gesamte Gehäusemantel aus der Barriereschicht gebildet ist. Bei einer solchen Ausgestaltung sind die Schichtstoffe in dem gesamten Material des Gehäusemantels verteilt. Um möglichst geringe Fertigungskosten zu ermöglichen kann allgemein auch der Gehäusemantel gemeinsam mit dem Boden oder dem Deckel als eine Art Becher gebildet werden. Dieser Becher wird dann nach der Befüllung des Schmierstoffspenders durch den Deckel bzw. den Boden verschlossen, der beispielsweise durch eine Schweiß-, Klemm-, Schraub-, oder Bajonettverbindung an dem Gehäusemantel angeordnet werden kann. Der Gehäusemantel und der Boden oder der Deckel sind beispielsweise durch ein Mehrkomponenten-Spritzgießverfahren herstellbar, wobei vorzugsweise nur der Gehäusemantel des Spritzgießteils eine Beimischung von Schichtstoffen zur Verbesserung der Barriereeigenschaften aufweist.

Im Rahmen einer besonders bevorzugten Ausgestaltung der Erfindung ist vorgesehen, dass der Gehäusemantel durch ein Mehrkomponenten-Spritzgießverfahren gebildet ist und neben der Barriereschicht zumindest eine zweite Komponente aus einem thermoplastischen Polymer oder einer thermoplastischen Polymermischung aufweist. Durch die Beimischung der Schichtstoffe in der Barriereschicht kann es zu einer Versprödung kommen, sodass eine erhöhte Bruchgefahr besteht. Durch die Kombination der Barriereschicht mit einer zweiten Komponente in einem Mehrkomponenten-Spritzgießverfahren können sowohl eine gute Barrierewirkung durch die Barriereschicht in dem für die Gaspermeation relevanten Bereich als auch eine gute Stabilität durch die zweite Komponente erreicht werden.

Im Rahmen der Erfindung liegt dabei, dass die zweite Komponente aus der Grundsubstanz der Barriereschicht besteht und frei von Schichtstoffen ist. Im Rahmen einer solchen Ausgestaltung kann eine optimale Verbundfestigkeit zwischen der zweiten Komponente und der Barriereschicht erreicht werden, wobei für die Herstellung auch lediglich ein Polymermaterial oder eine Polymermischung bereit gehalten werden müssen. Neben Polyolefinen wie Polyethylen, Polypropylen, Polyethylen-Copolymer, Polypropylen-Copolymer oder Mischungen dieser Polymere sind insbesondere Polyethylenterephthalat (PET) und auch Polyamide (PA) als Grundsubstanz geeignet.

Entsprechend den jeweiligen Erfordernissen und dem bevorzugten Herstellungsverfahren kann der Gehäusemantel auch mehrere Schichten aufweisen, die auch aus unterschiedlichen Polymeren gebildet sein können.

Um bei dem zuvor beschriebenen Mehrkomponenten-Spritzgießverfahren eine besonders gute Barrierewirkung zu erreichen kann vorgesehen sein, dass sowohl die Barriereschicht als auch die zweite Komponente eine Beimischung an Schichtstoffen aufweisen, wobei der Gewichtsanteil der Schichtstoffe in der zweiten Komponente geringer ist als in der Barriereschicht, sodass die zweite Komponente noch eine ausreichende Stabilität aufweist.

Die Erfindung wird im Folgenden anhand einer lediglich ein Ausführungsbeispiel darstellenden Zeichnung erläutert. Es zeigen schematisch:
- Fig. 1: einen Schmierstoffspender,
- Fig. 2: eine alternative Ausgestaltung des Schmierstoffspenders,

- Fig. 3a, 3b: alternative Ausgestaltungen eines Gehäusemantels eines Schmierstoffspenders in einem Detailausschnitt,
- Fig. 4: eine weitere alternative Ausgestaltung des Schmierstoffspenders.

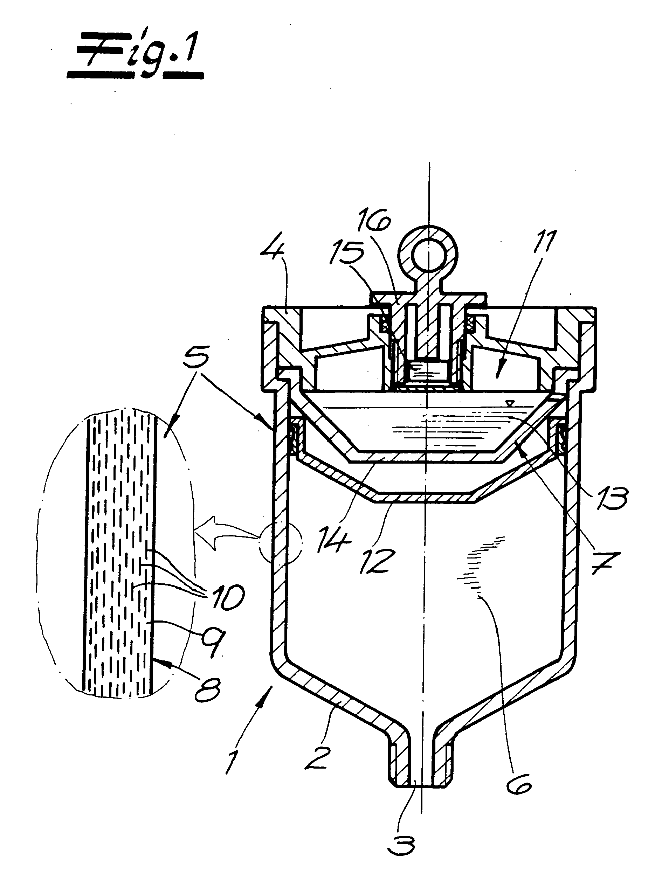

Der allgemeine Aufbau eines erfindungsgemäßen Schmierstoffspenders ist den Fig. 1, 2 und 4 zu entnehmen. Ein Gehäuse 1 des Schmierstoffspenders weist einen Boden 2 mit einer Gehäuseöffnung 3, einen Deckel 4 und dazwischen einen zylindrischen, vorzugsweise kreiszylindrischen Gehäusemantel 5 auf. In dem Gehäuse 1 befinden sich ein an die Gehäuseöffnung 3 anschließendes Schmierstoffreservoir 6 und ein Gaserzeuger 7 zum Auspressen des Schmierstoffes durch die Gehäuseöffnung 3. Der Gehäusemantel 5 ist bei den dargestellten Schmierstoffspendern transparent oder zumindest durchscheinend und weist zumindest abschnittsweise eine Barriereschicht 8 auf, die eine polymere Grundsubstanz 9 und zur Verbesserung der Barriereeigenschaften eine Beimischung von Schichtstoffen 10 aufweist. Ein Druckraum 11 für das von dem Gaserzeuger 7 gebildete Gas ist durch einen Kolben 12 von dem Schmierstoffreservoir 6 getrennt, wobei durch den aufgebauten Druck der Kolben 12 bewegt und der Schmierstoff durch die Gehäuseöffnung 3 ausgepresst wird. Die Stellung des Kolbens 12 und damit der Füllstand des Schmierstoffspenders sind durch den Gehäusemantel 5 sichtbar.

Bei dem in Fig. 1 dargestellten Schmierstoffspender sind der Boden 2 und der zylindrische Gehäusemantel 5 gemeinsam in einem Spritzgießverfahren einstückig hergestellt. Der Gehäusemantel 5 und auch der Boden 2 sind aus der Barriereschicht 8 gebildet, die als Grundsubstanz 9 einen thermoplastischen Polymer oder eine thermoplastische Polymermischung aufweist. Die Barriereschicht 8 enthält Schichtsilikate als Schichtstoffe 10 mit einem Anteil von vorzugsweise etwa 5 Gew.-%. Die Schichtstoffe 10 sind vollständig oder zumindest weitgehend exfoliert, d. h. von einander getrennt und fein in der Grundsubstanz 9 dispergiert. Die Dicke der als Plättchen vorliegenden Schichtstoffe 10 ist typischerweise im Nanometerbereich, wobei das Verhältnis des mittleren Durchmessers zu der Dicke üblicherweise zwischen 200 und 1100 liegt. Die Plättchen haben üblicherweise eine unregelmäßige Kontur, wobei sich der angegebene mittlere Durchmesser auf eine Kreisfläche mit dem gleichen Flächeninhalt bezieht. In dem Ausführungsbeispiel der Fig. 1 ist der Deckel 4, der ohne Einschränkung auch aus dem Material der Barriereschicht 8 bestehen kann, in den Gehäusemantel 5 eingepresst, verschweißt oder eingeklebt. Der Gaserzeuger 7 ist aus einem mit einer Elektrolytflüssigkeit 13 gefüllten Becken 14 und einem galvanischen Element 15 gebildet, welches zunächst in einer Hülse 16 angeordnet ist. Zur Inbetriebnahme des Schmierstoffspenders wird die Hülse 16 in eine Öffnung des Deckels 4 eingeschraubt, wobei das galvanische Element 15 in die Elektrolytflüssigkeit 13 fällt und eine elektrochemische Gaserzeugungsreaktion auslöst.

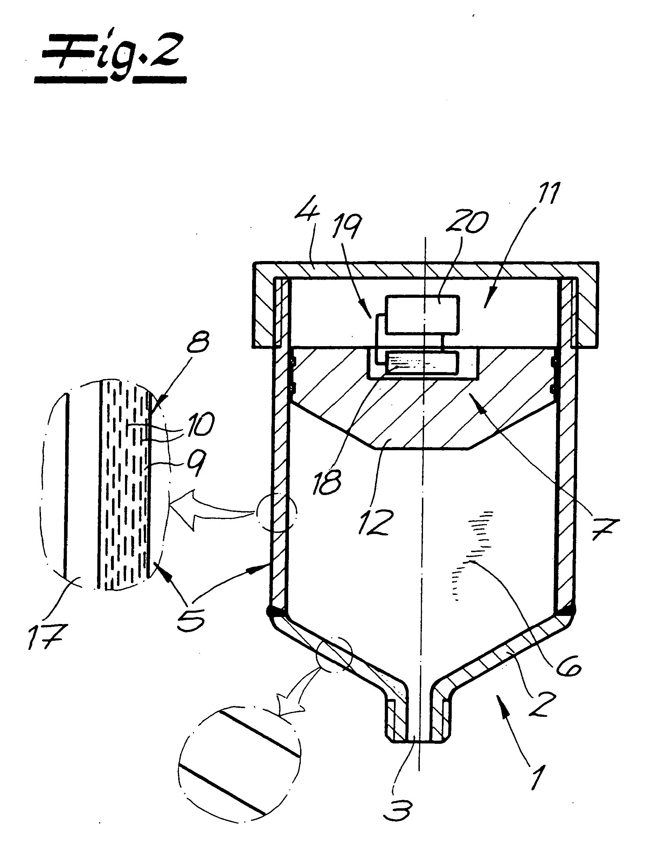

Fig. 2 zeigt eine alternative Ausgestaltung des Schmierstoffspenders, wobei der Gehäusemantel 5 zweischichtig mit einer wie zuvor beschrieben ausgeführten Barriereschicht 8 und einer Außenschicht aus einer zweiten Komponente 17 aus einem thermoplastischen Polymer oder einer thermoplastischen Polymermischung gebildet ist. Während die Barriereschicht 8 durch die Beimischung der Schichtstoffe 10 in einem gewissen Maße versprödet ist, gewährleistet die aus der zweiten Komponente 17 gebildete Außenschicht die erforderliche Stabilität und Bruchfestigkeit des Schmierstoffspenders. Die beiden Schichten des Gehäusemantels 5 sind in einem Zweikomponenten-Spritzgießverfahren gebildet, wobei die Außenschicht ohne Einschränkung aus der Grundsubstanz 9 der Barriereschicht 8 oder einem anderen Polymer gebildet sein kann. Besonders geeignet sind ohne Einschränkung Polyolefine, PET und PA. Bei der in Fig. 2 dargestellten Ausgestaltung ist der Boden 2 an den Gehäusemantel 5 angeschweißt oder ebenfalls im Zweikomponenten-Spritzgießverfahren angespritzt und besteht lediglich aus einer Schicht, die frei von Schichtstoffen 10 ist. In dem Druckraum 11 für das gebildete Gas ist als Gaserzeuger 7 eine galvanische Zelle 18 angeordnet, die die Form einer Knopfzelle aufweist. Die galvanische Zelle 18 ist an einen elektrischen Schaltkreis 19 mit einem Microcontroller 20 angeschlossen, wobei durch den Microcontroller 20 eine bedarfsgerechte Steuerung der Gaserzeugungsrate über eine Variation des über die galvanische Zelle 18 fließenden Stromes möglich ist.

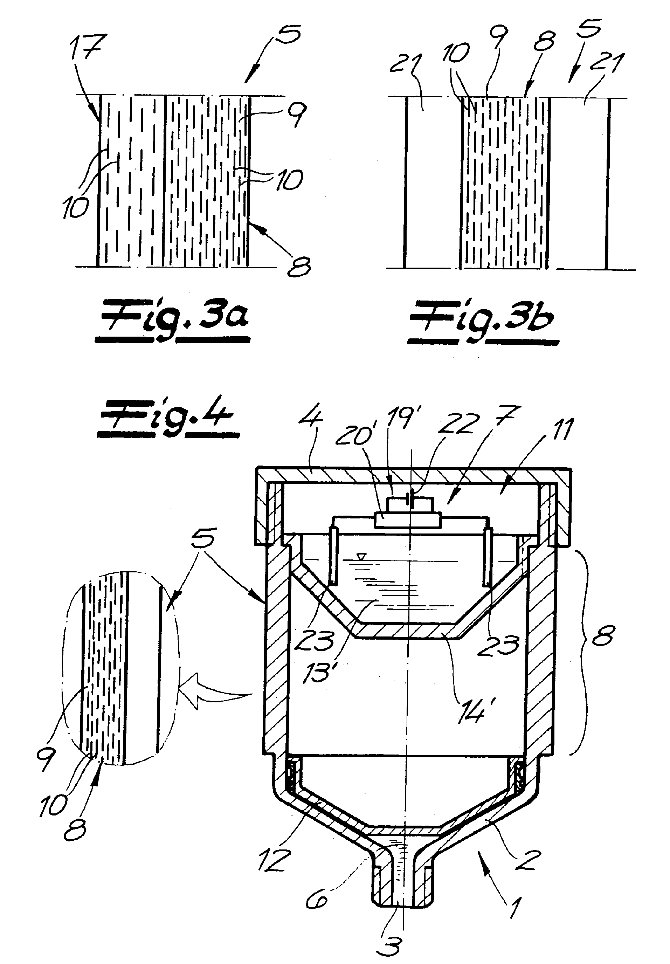

Die Fig. 3a und 3b zeigen alternative Ausgestaltungen des Gehäusemantels 5 mit einem zweischichtigen bzw. dreischichtigen Aufbau. Gemäß dem Ausführungsbeispiel der Fig. 3a ist der Gehäusemantel 5 aus der Barriereschicht 8 und einer weiteren Schicht aus einer zweiten Komponente 17 gebildet, wobei auch die zweite Komponente 17 einen geringen Anteil an Schichtstoffen 10 aufweist. Durch die Schichtstoffe 10 in der zweiten Komponente 17 können die Barriereeigenschaften verbessert werden, wobei das Gehäuse 1 noch eine ausreichende mechanische Stabilität aufweist. Fig. 3b zeigt einen dreischichtigen Aufbau, bei dem die Barriereschicht 8 zwischen zwei weiteren Schichten 21 angeordnet ist.

Fig. 4 zeigt eine alternative Ausgestaltung des Schmierstoffspenders, bei der sich die Barriereschicht 8 lediglich in einem von dem Kolben 12 überstrichenen Bereich des Gehäusemantels 5 befindet. Bei dem dargestellten Ausführungsbeispiel weist der Gaserzeuger 7 ein Becken 14' mit einer Elektrolytflüssigkeit 13' auf, in die zwei über einen Schaltkreis 19' an eine Spannungsquelle 22 und einen Microcontroller 20' angeschlossene Elektroden 23 eintauchen. Die Gaserzeugungsrate, die typischerweise eine lineare Funktion des über die Elektrolytflüssigkeit 13' fließenden Stromes ist, kann durch den Microcontroller 20' bedarfsgerecht eingestellt werden, wobei der Microcontroller 20' auch zur Programmierung an eine externe Schnittstelle angeschlossen sein kann. Wie bei der Ausgestaltung gemäß der Fig. 2 ist der Deckel 4 mit dem Gehäusemantel 5 verschraubt.

## Patentansprüche

1. Schmierstoffspender mit einem Gehäuse (1), welches einen Boden (2) mit einer Gehäuseöffnung (3), einen Deckel (4) und einen Gehäusemantel (5) aufweist, einem Schmierstoffreservoir (6) und einem in dem Gehäuse (1) angeordneten Gaserzeuger (7) zum Auspressen des Schmierstoffs, wobei der Gehäusemantel (5) zumindest abschnittsweise transparent oder durchscheinend ist und zumindest eine Barriereschicht (8) aufweist, **dadurch gekennzeichnet, dass** die Barriereschicht (8) eine polymere Grundsubstanz (9) und zur Verbesserung der Barriereeigenschaften eine Beimischung von Schichtstoffen (10) aufweist.

2. Schmierstoffspender nach Anspruch 1, **dadurch gekennzeichnet, dass** der Anteil der Schichtstoffe (10) in der Barriereschicht (8) zwischen 1 Gew.-% und 10 Gew.-%, vorzugsweise zwischen 3 Gew.-% und 7 Gew.-% beträgt.

3. Schmierstoffspender nach Anspruch 1 oder 2, **dadurch gekennzeichnet, dass** die Grundsubstanz (9) der Barriereschicht (8) ein thermoplastisches Polymer oder ein thermoplastisches Polymergemisch ist und dass die Schichtstoffe (10) aus einem anorganischen Material bestehen.

4. Schmierstoffspender nach einem der Ansprüche 1 bis 3, **dadurch gekennzeichnet, dass** die Schichtstoffe (10) in der Grundsubstanz (9) als fein dispergierte Plättchen vorliegen.

5. Schmierstoffspender nach Anspruch 4, **dadurch gekennzeichnet, dass** die Plättchen entsprechend der Ausdehnung des Gehäusemantels (5) flach ausgerichtet sind.

6. Schmierstoffspender nach einem der Ansprüche 1 bis 5, **dadurch gekennzeichnet, dass** der Gehäusemantel (5) zumindest abschnittsweise mehrschichtig ausgebildet ist.

7. Schmierstoffspender nach einem der Ansprüche 1 bis 6, **dadurch gekennzeichnet, dass** der Gehäusemantel (5) und der Boden (2) oder der Deckel (4) durch ein Mehrkomponenten-Spritzgießverfahren gebildet ist und dass zumindest der Mantel des Spritzgießteils eine Beimischung von Schichtstoffen zur Verbesserung der Barriereeigenschaften aufweist.

8. Schmierstoffspender nach einem der Ansprüche 1 bis 7, **dadurch gekennzeichnet, dass** der Gehäusemantel (5) durch ein Mehrkomponenten-Spritzgießverfahren gebildet ist und neben der Barriereschicht (8) zumindest eine zweite Komponente (17) aus einem thermoplastischen Polymer oder einer thermoplastischen Polymermischung aufweist.

9. Schmierstoffspender nach Anspruch 8, **dadurch gekennzeichnet, dass** die zweite Komponente (17) aus der Grundsubstanz (9) der Barriereschicht (8) besteht.

10. Schmierstoffspender nach Anspruch 8, **dadurch gekennzeichnet, dass** die zweite Komponente (17) eine Beimischung an Schichtstoffen (10) aufweist, wobei der Gewichtsanteil der Schichtstoffe (10) in der zweiten Komponente (17) geringer als in der Barriereschicht (8) ist.
